# EUROPEAN PATENT APPLICATION

(11) **EP 4 539 194 A1**
(43) Date of publication of application: **16.04.2025**
(21) Application number: 23819906.1
(22) Date of filing: 09.06.2023
(51) Int. Cl.: H01M 10/0585, H01G 11/26, H01G 11/68, H01G 11/70, H01G 11/86, H01M 4/06, H01M 4/13, H01M 4/24, H01M 4/66, H01M 4/80, H01M 6/12, H01M 6/16, H01M 6/18, H01M 10/052, H01M 10/0562, H01M 10/28

(54) **ELECTRODE STACK, METHOD FOR PRODUCING SAME AND ELECTROCHEMICAL ELEMENT**

(30) Priority: 10.06.2022 JP 2022094728
(71) Applicant: Maxell, Ltd., Kyoto 618-8525 (JP)
(72) Inventor: NISHIMURA, Masaki, Otokuni-gun, Kyoto 618-8525 (JP); MASUDA, Shumpei, Otokuni-gun, Kyoto 618-8525 (JP); YAMAGUCHI, Koji, Otokuni-gun, Kyoto 618-8525 (JP)
(74) Representative: Diehl & Partner
(86) International application number: PCT/JP2023/021514
(87) International publication number: WO 2023/238926

(57) **Abstract**

Provided is an electrode stacked body that can be used for assembly of an electrochemical device and can reduce an internal resistance, a method for producing the electrode stacked body, and an electrochemical device that includes the electrode stacked body. The electrode stacked body of the present invention includes a first electrode, a second electrode, and an isolation layer interposed between the first electrode and the second electrode. At least one of the first electrode and the second electrode has an electrode mixture layer and a sheet-type porous metal base material. At least a part of the porous metal base material, including one end portion facing the electrode mixture layer, is embedded in a surface layer of the electrode mixture layer and integrated with the electrode mixture layer. The other end portion of the porous metal base material is exposed on the surface of the electrode. The electrochemical device of the present invention includes an exterior body having a conductive path leading to the outside and the electrode stacked body of the present invention. The porous metal base material on the surface of at least one electrode of the electrode stacked body is brought into contact with the conductive path, providing electrical conduction between the electrode and the conductive path.

## Description

### Technical Field

The present invention relates to an electrode stacked body that can be used for assembly of an electrochemical device and can reduce an internal resistance, a method for producing the electrode stacked body, and an electrochemical device that includes the electrode stacked body.

### Background Art

With the development of portable electronic equipment such as mobile phones and notebook personal computers and the practical use of electric vehicles in recent years, there has been a growing demand for small lightweight batteries having a high capacity and a high energy density.

At present, lithium batteries that can meet the demand above, particularly lithium ion batteries include the following: a lithium-containing composite oxide such as lithium cobalt oxide (LiCoO₂) or lithium nickel oxide (LiNiO₂) as a positive electrode active material; graphite or the like as a negative electrode active material; and an organic electrolyte solution containing an organic solvent and a lithium salt as a non-aqueous electrolyte.

Moreover, with the further development of equipment using lithium ion batteries, the lithium ion batteries are required to have not only a longer life, a higher capacity, and a higher energy density, but also high reliability.

However, the organic electrolyte solution used in the lithium ion batteries contains a flammable organic solvent and might generate abnormal heat if an unusual situation such as a short circuit occurs in the batteries. In view of the recent trend of increasing the energy density and the amount of the organic solvent in the organic electrolyte solution of the lithium ion batteries, the reliability of the lithium ion batteries needs to be further improved.

Under these circumstances, all-solid-state lithium batteries that do not include an organic solvent have also been studied. The all-solid-state lithium batteries use a molded body of a solid electrolyte containing no organic solvent, instead of a conventional organic solvent-based electrolyte, and therefore are highly reliable because the solid electrolyte poses no risk of abnormal heat generation.

Moreover, the all-solid-state batteries have high reliability, high environmental resistance, and a long life in addition to high safety, and are expected to be maintenance-free batteries that can contribute to the development, safety, and security of the society. The introduction of the all-solid-state batteries into the society serves to achieve the following goals of the 17 Sustainable Development Goals (SDGs) established by the United Nations: Goal 3 (Ensure healthy lives and promote well-being for all at all ages); Goal 7 (Ensure access to affordable, reliable, sustainable and modern energy for all); Goal 11 (Make cities and human settlements inclusive, safe, resilient and sustainable); and Goal 12 (Ensure sustainable consumption and production patterns).

Some batteries, including the all-solid-state batteries, are known to have a flat shape and called coin batteries or button batteries. Such a flat battery includes an exterior body composed of an exterior can, a sealing can, and a gasket interposed between the exterior can and the sealing can, and the edge around the opening of the exterior can is crimped inward. When the battery such as an all-solid-state battery includes electrodes (pellet electrodes), each of which is made of a molded body of an electrode mixture containing an active material, the exterior can and the sealing can are generally used as conductive paths that lead from the inside to the outside of the battery, and the pellet electrodes are brought into contact with the respective conductive paths. Thus, the exterior can and the sealing can function as a pair of electrode terminals.

However, when the pellet electrodes are in contact with the conductive paths, the conductive connections between them are not sufficiently established due to, e.g., vibrations or changes in volume of the electrodes during charge and discharge. Consequently, the internal resistance of the battery is likely to be high.

On the other hand, technologies have been proposed to reduce the internal resistance of the battery having the conductive paths described above. For example, Patent Document 1 discloses an all-solid-state lithium battery, in which current collectors made of, e.g., metal mesh or foamed metal are each fixed to at least one of a battery case and a sealing plate at multiple points, so that the points of contact between the respective current collectors and electrodes are configured to be movable with respect to the battery case or the sealing plate. In addition, the current collectors have high spring elasticity. This configuration ensures sufficient contact between the current collectors and their respective positive electrode pellets and negative electrode pellets of the battery.

Patent Document 1 also discloses another aspect of the all-solid-state lithium battery, in which the current collector is embedded in at least one of the positive electrode pellets and the negative electrode pellets. This configuration establishes an electronic conduction network in the electrodes to improve the current collection efficiency. The all-solid-state lithium battery disclosed in Patent Document 1 uses these means to reduce the internal resistance.

Patent Document 2 discloses a flat-shaped all-solid-state battery including a stack of a positive electrode, a solid electrolyte layer, and a negative electrode and a conductive porous member that is disposed between the stack and the inner bottom surface of an outer can or between the stack and the inner bottom surface of a sealing can. The conductive porous member is made of a molded body of graphite and has flexibility. This configuration can maintain good contact between the electrode stack and the battery container, and thus can ensure excellent conductive properties.

### Prior Art Documents

### Patent Documents

Patent Document 1: JP H10(1998)-247516 A
Patent Document 2: WO 2020/066323

### Disclosure of Invention

### Problem to be Solved by the Invention

As disclosed in Patent Document 1, when the electrode mixture layer is movably brought into contact with the current collector made of, e.g., highly rigid metal mesh or foamed metal, the electrical contact between them may be insufficient if the force pressing the contact surface is small, leading to an increase in the internal resistance of the battery. Moreover, when the current collector is simply embedded in the electrode mixture layer, the resistance inside the electrode may be reduced due to the formation of a conductive network by the current collector in the electrode; nevertheless, the contact resistance between the electrode and a conductive path such as an exterior can or a sealing can is unable to be reduced sufficiently.

On the other hand, as disclosed in Patent Document 2, the arrangement of a porous molded sheet of graphite between the electrode stack and the battery container can improve the electrical conduction between the electrode stack and the battery container due to the pressing force of the sheet. However, further consideration should be given to how to establish better conductive connection, while taking into account the material of a current collector.

The present invention has been made in view of the above circumstances, and it is an object of the present invention to provide an electrode stacked body that can be used for assembly of an electrochemical device and can reduce an internal resistance, a method for producing the electrode stacked body, and an electrochemical device that includes the electrode stacked body.

### Means for Solving Problem

An electrode stacked body of the present invention includes a first electrode, a second electrode, and an isolation layer interposed between the first electrode and the second electrode. At least one of the first electrode and the second electrode has an electrode mixture layer and a sheet-type porous metal base material. At least a part of the porous metal base material, including one end portion facing the electrode mixture layer, is embedded in a surface layer of the electrode mixture layer and integrated with the electrode mixture layer. The other end portion of the porous metal base material is exposed on a surface of the electrode.

The electrode stacked body of the present invention can be produced by a production method of the present invention that includes: a first step of placing an electrode mixture in a die and pressing and preforming the electrode mixture; a second step of disposing a sheet-type porous metal base material on the electrode mixture preformed in the first step; and a third step of pressing the porous metal base material against the electrode mixture, compressing the porous metal base material, and thereby embedding at least a part of the porous metal base material, including an end portion facing the electrode mixture, in the electrode mixture, so that the electrode mixture is integrated with the porous metal base material to form an electrode mixture layer.

An electrochemical device of the present invention includes an exterior body and the electrode stacked body of the present invention that is enclosed in the exterior body. The exterior body is configured to have a conductive path leading from an inside to an outside, to bring the conductive path into contact with the porous metal base material on the surface of at least one electrode of the electrode stacked body, and to provide electrical conduction between the electrode and the conductive path.

### Effects of the Invention

The present invention can provide the electrode stacked body that can be used for assembly of an electrochemical device and can reduce the internal resistance, the method for producing the electrode stacked body, and the electrochemical device that includes the electrode stacked body.

### Brief Description of Drawing

[FIG. 1] FIG. 1 is a scanning electron microscope photograph of a surface (i.e., an electrode surface) of an example of the electrode stacked body of the present invention.
[FIG. 2] FIG. 2 is a cross-sectional view schematically illustrating an example of an electrochemical device of the present invention.

### Description of the Invention

An electrode stacked body of the present invention includes a first electrode, a second electrode, and an isolation layer interposed between the first electrode and the second electrode. At least one of the first electrode and the second electrode has an electrode mixture layer and a sheet-type porous metal base material. At least a part of the porous metal base material, including one end portion facing the electrode mixture layer, is embedded in a surface layer of the electrode mixture layer and integrated with the electrode mixture layer. The other end portion of the porous metal base material is exposed on the surface of the electrode.

In the electrode stacked body of the present invention, at least one of the two electrodes has the electrode mixture layer and the sheet-type porous metal base material that functions as a current collector. A certain range of the porous metal base material that extends in the thickness direction from the end portion (end face) facing the electrode mixture layer is embedded in the surface layer of the electrode mixture layer. Therefore, the electrode mixture forming the electrode mixture layer is retained in at least some of the pores of the porous metal base material, so that the porous metal base material and the electrode mixture layer are integrated together. This configuration significantly improves the conductive properties between the electrode mixture layer and the current collector.

Moreover, in at least one electrode of the electrode stacked body that has the electrode mixture layer and the sheet-type porous metal base material, the end portion (end face) of the porous metal base material facing away from the electrode mixture layer is exposed on the surface (electrode surface). Therefore, when the electrode stacked body of the present invention is enclosed in an exterior body, having a conductive path leading from the inside to the outside of the exterior body, to constitute an electrochemical device, the porous metal base material on the surface of the at least one electrode is brought into contact with the conductive path. This configuration also significantly improves the conductive properties between the electrode and the conductive path.

Due to these effects, the electrode stacked body of the present invention can reduce the internal resistance and improve the properties of the electrochemical device. In other words, the electrochemical device of the present invention includes the electrode stacked body of the present invention and will have a low internal resistance and excellent properties because of the above effects of the electrode stacked body.

The electrode stacked body of the present invention may have the following configuration: one of the first electrode and the second electrode has the electrode mixture layer and the sheet-type porous metal base material; at least a part of the porous metal base material, including one end portion facing the electrode mixture layer, is embedded in the surface layer of the electrode mixture layer and integrated with the electrode mixture layer; and the other end portion of the porous metal base material is exposed on the surface of the electrode. This configuration can reduce the internal resistance of the electrochemical device. However, it is preferable that both the first electrode and the second electrode have the configuration as described above, in order to provide the electrochemical device with a lower internal resistance and better properties.

The electrochemical device of the present invention includes a battery, a capacitor, etc. When the electrochemical device is a battery, examples of the battery include a primary battery, a secondary battery, a battery (all-solid-state battery) having a solid electrolyte layer interposed between a positive electrode and a negative electrode, and a battery (other than the all-solid-state battery) having a separator interposed between a positive electrode and a negative electrode, and an electrolyte containing a solvent (such as a non-aqueous electrolyte solution, an aqueous electrolyte solution, or gel electrolyte obtained by gelation of any of these electrolyte solutions). When the electrochemical device is a capacitor, examples of the capacitor include an electric double layer capacitor and a lithium ion capacitor.

### <Electrode stacked body>

The electrode stacked body includes a first electrode, a second electrode, and an isolation layer interposed between the first electrode and the second electrode.

When the electrochemical device including the electrode stacked body is a battery or a lithium ion capacitor, one of the first electrode and the second electrode is a positive electrode and the other is a negative electrode. When the electrochemical device including the electrode stacked body is an electric double layer capacitor, the first electrode and the second electrode may have the same configuration.

Moreover, at least one of the first electrode and the second electrode has an electrode mixture layer and a sheet-type porous metal base material, as described above. At least a part of the porous metal base material, including one end portion facing the electrode mixture layer, is embedded in a surface layer of the electrode mixture layer and integrated with the electrode mixture layer. The other end portion of the porous metal base material is exposed on the surface of the electrode.

In the electrode stacked body used in a battery, when the electrode with the above configuration is a positive electrode, the electrode mixture layer is composed of a positive electrode mixture containing, e.g., a positive electrode active material.

When the electrode with the above configuration is a positive electrode of a primary battery, the positive electrode active material may be the same as that used in, e.g., conventionally known non-aqueous electrolyte primary batteries, alkaline batteries, or manganese batteries. Specifically, examples of the positive electrode active material include the following: manganese dioxide; lithium-containing manganese oxides (such as LiMn₃O₆ and composite oxides having the same crystal structure as manganese dioxide (e.g., β-type, γ-type, or a mixed structure of β-type and γ-type), where the Li content is 3.5% by mass or less, preferably 2% by mass or less, more preferably 1.5% by mass or less, and particularly preferably 1% by mass or less); lithium -containing composite oxides such as LiₐTi_{5/3}O₄ (4/3 ≤ a < 7/3); vanadium oxides; niobium oxides; titanium oxides; sulfides such as iron disulfide; graphite fluoride; silver sulfides such as Ag₂S; and nickel oxides such as NiO₂.

When the electrode with the above configuration is a positive electrode of a secondary battery, the positive electrode active material may be the same as that used in, e.g., conventionally known non-aqueous electrolyte secondary batteries or alkaline secondary batteries. Specifically, examples of the positive electrode active material include the following: spinel-type lithium manganese composite oxides represented by Li_{1 - x}MᵣMn_{2 - r}O₄ (where M is at least one element selected from the group consisting of Li, Na, K, B, Mg, Ca, Sr, Ba, Ti, V, Cr, Zr, Fe, Co, Ni, Cu, Zn, Al, Sn, Sb, In, Nb, Ta, Mo, W, Y, Ru, and Rh, 0 ≤ x ≤ 1, and 0 ≤ r ≤ 1); layered compounds represented by LiᵣMn_{(1 - s - t)}NiₛMₜO₍₂ - ᵤ₎Fᵥ (where M is at least one element selected from the group consisting of Co, Mg, Al, B, Ti, V, Cr, Fe, Cu, Zn, Zr, Mo, Sn, Ca, Sr, and W, 0 ≤ r ≤ 1.2, 0 < s < 0.5, 0 ≤ t ≤ 0.5, u + v < 1, - 0.1 ≤ u ≤ 0.2, and 0 ≤ v ≤ 0.1); lithium cobalt composite oxides represented by Li_{1 - x}Co_{1 - r}MᵣO₂ (where M is at least one element selected from the group consisting of Al, Mg, Ti, V, Cr, Zr, Fe, Ni, Cu, Zn, Ga, Ge, Nb, Mo, Sn, Sb, and Ba, 0 ≤ x ≤ 1, and 0 ≤ r ≤ 0.5); lithium nickel composite oxides represented by Li_{1 - x}Ni_{1 - r}MᵣO₂ (where M is at least one element selected from the group consisting of Al, Mg, Ti, Zr, Fe, Co, Cu, Zn, Ga, Ge, Nb, Mo, Sn, Sb, and Ba, 0 ≤ x ≤ 1, and 0 ≤ r ≤ 0.5); olivine-type composite oxides represented by Li_{1 + s - x}M_{1 - r}N ᵣPO₄Fₛ (where M is at least one element selected from the group consisting of Fe, Mn, and Co, N is at least one element selected from the group consisting of Al, Mg, Ti, Zr, Ni, Cu, Zn, Ga, Ge, Nb, Mo, Sn, Sb, V, and Ba, 0 ≤ x ≤ 1, 0 ≤ r ≤ 0.5, and 0 ≤ s ≤ 1); pyrophosphate compounds represented by Li_{2 - x}M₁₋ᵣNᵣP₂O₇ (where M is at least one element selected from the group consisting of Fe, Mn, and Co, N is at least one element selected from the group consisting of Al, Mg, Ti, Zr, Ni, Cu, Zn, Ga, Ge, Nb, Mo, Sn, Sb, V, and Ba, 0 ≤ x ≤ 2, and 0 ≤ r ≤ 0.5); nickel hydroxide; and silver oxide. These compounds may be used alone or in combination of two or more.

When the electrochemical device is an all-solid-state secondary battery, the average particle size of the positive electrode active material is preferably 1 µm or more, and more preferably 2 µm or more and is also preferably 10 µm or less, and more preferably 8 µm or less. The positive electrode active material may be either primary particles or secondary particles formed by the aggregation of primary particles. The use of the positive electrode active material having an average particle size within the above range increases the interface with the solid electrolyte contained in the positive electrode, and thus can further improve the output characteristics of the battery.

In this specification, the average particle size of various particles (the positive electrode active material, the solid electrolyte, etc.) means a 50% diameter value (D₅₀) in the volume-based cumulative fraction where the integrated volume of particles is calculated in ascending order of particle size by using a particle size distribution analyzer (e.g., Microtrac particle size distribution analyzer "HRA9320" manufactured by NIKKISO CO., LTD.).

When the electrochemical device is an all-solid-state secondary battery, the positive electrode active material preferably has a reaction inhibition layer on its surface to inhibit a reaction with the solid electrolyte contained in the positive electrode.

If the positive electrode active material comes into direct contact with the solid electrolyte in the electrode mixture layer (the positive electrode mixture layer), the solid electrolyte is oxidized to form a resistance layer that may reduce the ionic conduction in the electrode mixture layer. The presence of the reaction inhibition layer on the surface of the positive electrode active material to inhibit a reaction with the solid electrolyte can prevent direct contact between the positive electrode active material and the solid electrolyte. This can suppress a reduction in the ionic conduction in the electrode mixture layer caused by the oxidation of the solid electrolyte.

The reaction inhibition layer may be made of a material that has an ionic conductivity and is able to inhibit the reaction between the positive electrode active material and the solid electrolyte. Examples of the material that can constitute the reaction inhibition layer include oxides containing Li and at least one element selected from the group consisting of Nb, P, B, Si, Ge, Ti, and Zr, more specifically Nb-containing oxides such as LiNbO₃, and Li₃PO₄, Li₃BO₃, Li₄SiO₄, Li₄GeO₄, LiTiO₃, LiZrO₃, and Li₂WO₄. The reaction inhibition layer may contain only one of these oxides, or may contain two or more of these oxides. Alternatively, the reaction inhibition layer may contain a composite compound of two or more of these oxides. Among the oxides, Nb-containing oxides are preferred, and LiNbO₃ is more preferred.

The amount of the reaction inhibition layer present on the surface of the positive electrode active material is preferably 0.1 to 1.0 part by mass with respect to 100 parts by mass of the positive electrode active material. The use of the reaction inhibition layer within the above range can satisfactorily inhibit the reaction between the positive electrode active material and the solid electrolyte.

Examples of the method for forming the reaction inhibition layer on the surface of the positive electrode active material include a sol-gel method, a mechanofusion method, a CVD method, a PVD method, and an ALD method.

The content of the positive electrode active material in the positive electrode mixture is preferably 60 to 85% by mass from the viewpoint of further increasing the energy density of the electrochemical device.

The positive electrode mixture may contain a conductive assistant. Specific examples of the conductive assistant include carbon materials such as graphite (natural graphite and artificial graphite), graphene, carbon black, carbon nanofibers, and carbon nanotubes. The conductive assistant is not necessary when the active material is, e.g., Ag₂S because conductive Ag is generated during the discharge reaction. The content of the conductive assistant in the positive electrode mixture is preferably 1.0 part by mass or more and is also preferably 7.0 parts by mass or less, and more preferably 6.5 parts by mass or less with respect to 100 parts by mass of the positive electrode active material.

The positive electrode mixture may contain a binder. Specific examples of the binder include fluororesins such as polyvinylidene fluoride (PVDF). The positive electrode mixture does not need to contain a binder, provided that good moldability can be ensured in forming the electrode mixture layer (the positive electrode mixture layer) without using a binder, e.g., as in the case where the positive electrode mixture contains a sulfide-based solid electrolyte (which will be described in detail later).

The content of the binder in the positive electrode mixture is preferably 15% by mass or less and is also preferably 0.5% by mass or more. On the other hand, when the positive electrode mixture ensures moldability without requiring a binder, the content of the binder in the positive electrode mixture is preferably 0.5% by mass or less, more preferably 0.3% by mass or less, and further preferably 0% by mass (i.e., no binder is contained).

When the electrochemical device is an all-solid-state battery (such as all-solid-state primary battery or all-solid-state secondary battery), the positive electrode mixture preferably contains a solid electrolyte.

The solid electrolyte contained in the positive electrode mixture is not particularly limited, but should have a lithium ion conductivity. For example, the solid electrolyte may be a sulfide-based solid electrolyte, a hydride-based solid electrolyte, a halide-based solid electrolyte, or an oxide-based solid electrolyte.

Examples of the sulfide-based solid electrolyte include the following: particles of Li₂S-P₂S₅-based glass, Li₂S-SiS₂-based glass, Li₂S-P₂S₅-GeS₂-based glass, and Li₂S-B₂S₃-based glass; thio-LISICON type solid electrolytes (represented by the general formula: Li_{12 - 12a - b + c + 6d - e}M¹_{3 + a - b - c-d}M²_{b}M³_{c}M⁴_{d}M⁵_{12 - e}Xₑ, where M¹ is Si, Ge, or Sn, M² is P or V, M³ is Al, Ga, Y, or Sb, M⁴ is Zn, Ca, or Ba, M⁵ is either S or S and O, X is F, Cl, Br, or I, 0 ≤ a < 3, 0 ≤ b + c + d ≤ 3, and 0 ≤ e ≤ 3) such as Li₁₀GeP₂S₁₂ and Li_{9.54}Si_{1.74}P_{1.44}S_{11.7}Cl_{0.3}, which have attracted attention in recent years because of high lithium ion conductivity; and solid electrolytes having an argyrodite-type crystal structure, as will be described later.

Examples of the hydride-based solid electrolyte include LiBH₄ and solid solutions of LIBH₄ and any of the following alkali metal compounds (e.g., the molar ratio of LiBH₄ to the alkali metal compound ranges from 1:1 to 20:1). The alkali metal compound in the solid solution may be at least one selected from the group consisting of lithium halides (LiI, LiBr, LiF, LiCl, etc.), rubidium halides (RbI, RbBr, RbF, RbCl, etc.), cesium halides (CsI, CsBr, CsF, CsCl, etc.), lithium amides, rubidium amides, and cesium amides.

Examples of the halide-based solid electrolyte include monoclinic LiAlCl₄, defective spinel-type or layered LiInBr₄, and monoclinic Li_{6 - 3m}YₘX₆ (where 0 < m < 2 and X = Cl or Br). In addition to the above, known solid electrolytes as disclosed in, e.g., WO 2020/070958 and WO 2020/070955 can also be used.

Examples of the oxide-based solid electrolyte include garnet-type: Li₇La₃Zr₂O₁₂, NASICON-type: Li_{1 + O}Al_{1 + O}Ti_{2 - O}(PO₄)₃ and Li_{1 + p}Al_{1 + p}Ge₂₋ₚ(PO₄)₃, and perovskite-type: Li_{3q}La_{2/3 - q}TiO₃.

Among these solid electrolytes, the sulfide-based solid electrolyte is preferred because it has a high lithium ion conductivity, the sulfide-based solid electrolyte containing Li and P is more preferred, and the sulfide-based solid electrolyte having an argyrodite-type crystal structure is further preferred because it has a higher lithium ion conductivity and high chemical stability.

The sulfide-based solid electrolyte having an argyrodite-type crystal structure represented by the following general composition formula (1) or (2), such as Li₆PS₅Cl, is particularly preferred.

Li_{7 - x + y}PS_{6 - x}Cl_{x + y} (1)

In the general composition formula (1), x and y satisfy 0.05 ≤ y ≤ 0.9 and - 3.0x + 1.8 ≤ y ≤ - 3.0x + 5.7.

Li_{7 - a}PS_{6 - a}Cl_{b}Br_{c} (2)

In the general composition formula (2), a, b, and c satisfy a = b + c, 0 < a ≤ 1.8, and 0.1 ≤ b/c ≤ 10.0.

The average particle size of the solid electrolyte is preferably 0.1 µm or more, and more preferably 0.2 µm or more from the viewpoint of reducing grain boundary resistance. On the other hand, the average particle size of the solid electrolyte is preferably 10 µm or less, and more preferably 5 µm or less from the viewpoint of forming a sufficient contact interface between the active material and the solid electrolyte.

The content of the solid electrolyte in the positive electrode mixture is preferably 10 parts by mass or more, and more preferably 15 parts by mass or more with respect to 100 parts by mass of the positive electrode active material from the viewpoint of further increasing the ionic conduction in the positive electrode and further improving the output characteristics of the electrochemical device. However, if the amount of the solid electrolyte in the positive electrode mixture is too large, the amounts of other components will be reduced, so that their effects may be smaller. Therefore, the content of the solid electrolyte in the positive electrode mixture is preferably 65 parts by mass or less, and more preferably 60 parts by mass or less with respect to 100 parts by mass of the positive electrode active material.

In the electrode stacked body used in a battery, when the electrode with the above configuration is a negative electrode, the electrode mixture layer is composed of a negative electrode mixture containing, e.g., a negative electrode active material.

Examples of the negative electrode active material include carbon materials such as graphite, lithium titanium oxides (e.g., lithium titanate), and simple substances, compounds (e.g., oxides), and their alloys that contain elements such as Si and Sn. Moreover, the negative electrode active material may be, e.g., lithium metal or lithium alloys (such as lithium-aluminum alloy and lithium-indium alloy).

The content of the negative electrode active material in the negative electrode mixture is preferably 40 to 80% by mass from the viewpoint of further increasing the energy density of the battery.

The negative electrode mixture may contain a conductive assistant. Specific examples of the conductive assistant may be the same as those listed above for the positive electrode mixture. The content of the conductive assistant in the negative electrode mixture is preferably 10 to 30 parts by mass with respect to 100 parts by mass of the negative electrode active material.

The negative electrode mixture may contain a binder. Specific examples of the binder may be the same as those listed above for the positive electrode mixture. The negative electrode mixture does not need to contain a binder, provided that good moldability can be ensured in forming the electrode mixture layer (the negative electrode mixture layer) without using a binder, e.g., as in the case where the negative electrode mixture contains a sulfide-based solid electrolyte (which will be described later).

The content of the binder in the negative electrode mixture is preferably 15% by mass or less and is also preferably 0.5% by mass or more. On the other hand, when the negative electrode mixture ensures moldability without requiring a binder, the content of the binder in the negative electrode mixture is preferably 0.5% by mass or less, more preferably 0.3% by mass or less, and further preferably 0% by mass (i.e., no binder is contained).

When the electrochemical device is an all-solid-state battery, the negative electrode mixture preferably contains a solid electrolyte. Specific examples of the solid electrolyte may be the same as those listed above for the positive electrode mixture. Among the solid electrolytes listed above, the sulfide-based solid electrolyte is preferred because it has a high lithium ion conductivity and also has the function of enhancing the moldability of the negative electrode mixture, the sulfide-based solid electrolyte having an argyrodite-type crystal structure is more preferred, and the sulfide-based solid electrolyte represented by the general composition formula (1) or (2) is further preferred.

The average particle size of the solid electrolyte contained in the negative electrode mixture is preferably 0.1 µm or more, and more preferably 0.2 µm or more and is also preferably 10 µm or less, and more preferably 5 µm or less for the same reasons as those described above for the positive electrode mixture.

The content of the solid electrolyte in the negative electrode mixture is preferably 30 parts by mass or more, and more preferably 35 parts by mass or more with respect to 100 parts by mass of the negative electrode active material from the viewpoint of further increasing the ionic conduction in the negative electrode and further improving the output characteristics of the electrochemical device. However, if the amount of the solid electrolyte in the negative electrode mixture is too large, the amounts of other components will be reduced, so that their effects may be smaller. Therefore, the content of the solid electrolyte in the negative electrode mixture is preferably 130 parts by mass or less, and more preferably 110 parts by mass or less with respect to 100 parts by mass of the negative electrode active material.

When the electrochemical device including the electrode stacked body is an electric double layer capacitor, the electrode mixture layer of the electrode with the above configuration may be composed of an electrode mixture having the same configuration as the positive electrode mixture described above, except that the active material is activated carbon.

When the electrochemical device including the electrode stacked body is a lithium ion capacitor, the electrode mixture layer of the electrode with the above configuration, which is a positive electrode, may be composed of an electrode mixture having the same configuration as the electrode mixture constituting the above electrode of the electric double layer capacitor; whereas, the electrode mixture layer of the electrode with the above configuration, which is a negative electrode, may be composed of an electrode mixture having the same configuration as the negative electrode mixture described above.

The porous metal base material of the electrode with the above configuration is preferably a foamed metal porous body. Specific examples of the foamed metal porous body include "Celmet (registered trademark)" manufactured by Sumitomo Electric Industries, Ltd. When the porous metal base material and the electrode mixture are formed into an electrode, the porous metal base material is usually compressed and becomes thinner. Consequently, the thickness of the porous metal base material before it is used for the electrode (electrode stacked body) is larger than that after it has been compressed (i.e., the thickness of the porous metal base material in the electrode). For example, the thickness of the porous metal base material before compression is preferably 0.1 mm or more, more preferably 0.3 mm or more, and particularly preferably 0.5 mm or more. On the other hand, the thickness of the porous metal base material before compression is preferably 3 mm or less, more preferably 2 mm or less, and particularly preferably 1.5 mm or less. The porous metal base material is compressed in the thickness direction during the production of the electrode stacked body and has a thickness as described later.

The porosity of the porous metal base material before compression is preferably 80% or more, more preferably 90% or more, and particularly preferably 95% or more so that the pores of the porous metal base material are easily filled with the electrode mixture, and the porous metal base material and the electrode mixture layer can be easily integrated in the process of pressing the porous metal base material and the electrode mixture together. On the other hand, the porosity of the porous metal base material is preferably 99.5% or less, more preferably 99% or less, and particularly preferably 98.5% or less in order to improve the conductive properties, while maintaining the amount of the base material at a certain level or more.

When only one of the first electrode and the second electrode of the electrode stacked body is the electrode with the above configuration, the other electrode may be any of the following: an electrode consisting of an electrode mixture molded body (such as a pellet); an electrode having an electrode mixture molded body (electrode mixture layer) that is formed on a current collector (which is other than the porous metal base material, e.g., a metal foil); or a metal sheet such as a lithium sheet or a lithium alloy sheet that functions as a negative electrode active material (where the electrochemical device is a battery and the other electrode is a negative electrode).

In the electrode with the above configuration, the thickness of the portion of the porous metal base material that is embedded in the electrode mixture layer is preferably 10% or more, and more preferably 20% or more of the thickness of the porous metal base material (i.e., the overall thickness of the porous metal base material, including the thickness of a portion that coexists with the electrode mixture layer; the same applies to the thickness of the porous metal base material below, unless otherwise specified) from the viewpoint of more reliably integrating the porous metal base material with the electrode mixture layer.

In order to reduce the resistance that occurs when the electrode with the above configuration is brought into contact with the conductive path in the exterior body of the electrochemical device, it is desirable that the end portion of the porous metal base material facing away from the electrode mixture layer (also referred to as a surface end portion in the following) is not embedded in the electrode mixture layer, and only the porous metal base material is present at the end portion of the electrode (i.e., the surface of the electrode). In other words, when the porous metal base material is compressed in the thickness direction during the production of the electrode stacked body, as will be described later, it is desirable that pores in the surface end portion of the porous metal base material are crushed away, leaving only the porous metal base material exposed on the surface of the electrode. However, some of the pores in the surface end portion of the porous metal base material may not be crushed, but may remain as they are or may be filled with the electrode mixture. In this case, a part of the electrode mixture may be exposed on the surface of the electrode along with the surface end portion of the porous metal base material, as long as it does not significantly affect the contact resistance with the conductive path. That is, the entire porous metal base material (which means 100% of the thickness of the porous metal base material) may be embedded in the surface layer of the electrode mixture layer, provided that the surface end portion of the porous metal base material can be exposed on the surface of the electrode. Filling the pores of the porous metal base material with the electrode mixture up to the surface of the electrode allows the porous metal base material to be more reliably integrated with the electrode mixture layer.

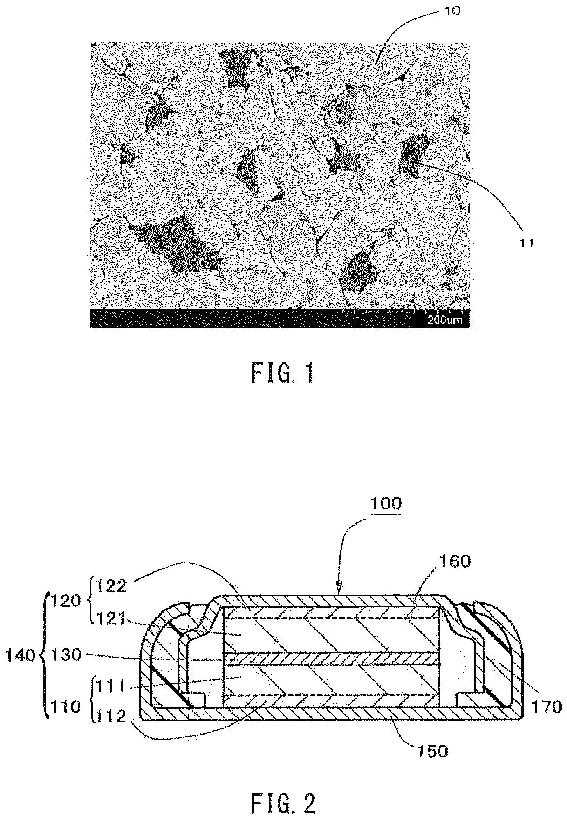

FIG. 1 is a scanning electron microscope (SEM) photograph of a surface of an example of the electrode stacked body of the present invention. As shown in FIG. 1, the end portion of a porous metal base material 10 of the electrode with the above configuration of the electrode stacked body is exposed on the surface of the electrode stacked body (i.e., the surface of the electrode), and a part of an electrode mixture 11 is also exposed on the surface of the electrode by entering the pores in the end portion of the porous metal base material.

The greater the proportion (area ratio) of the electrode mixture exposed on the surface of the electrode, the larger the contact resistance between the porous metal base material and the conductive path of the electrochemical device. Therefore, the proportion of the area of the exposed electrode mixture on the electrode surface is preferably 50% or less, more preferably 25% or less, even more preferably 15% or less, and particularly preferably 10% or less in a plan view.

In the electrode with the above configuration, when at least a part of the porous metal base material is embedded in the surface layer of the electrode mixture layer, the thickness of the porous metal base material is preferably 1% or more, more preferably 2% or more, and particularly preferably 3% or more of the overall thickness of the electrode mixture layer (including the thickness of a portion that coexists with the porous metal base material; the term "the thickness of the electrode mixture layer" means "the overall thickness of the electrode mixture layer" below, unless otherwise specified) from the viewpoint of more reliably integrating the porous metal base material with the electrode mixture layer. Furthermore, the thickness of the porous metal base material is preferably 30% or less, more preferably 20% or less, and particularly preferably 10% or less of the thickness of the electrode mixture layer from the viewpoint of improving the filling properties of the electrode mixture layer in the electrode.

In the electrode with the above configuration, the thickness of the porous metal base material is preferably 10 µm or more, more preferably 20 µm or more, and particularly preferably 30 µm or more. On the other hand, the thickness of the porous metal base material is preferably 300 µm or less, more preferably 200 µm or less, and particularly preferably 100 µm or less. The thickness of the electrode mixture layer is preferably 0.2 mm or more, more preferably 0.5 mm or more, and particularly preferably 0.7 mm or more. On the other hand, the thickness of the electrode mixture layer is preferably 2 mm or less, more preferably 1.7 mm or less, and particularly preferably 1.5 mm or less.

The thickness of the porous metal base material and the thickness of the electrode mixture layer in the electrode stacked body are each determined in the following manner. First, the cross section of the electrode in the thickness direction is observed with a scanning electron microscope (SEM) at a magnification of 50X to 1000X. Then, the maximum value of the width (in the thickness direction) of a region where the porous metal base material can be identified in the SEM image is defined as the thickness of the porous metal base material, and the maximum value of the width (in the thickness direction) of a region where the electrode mixture can be identified in the SEM image is defined as the thickness of the electrode mixture layer. Moreover, the thickness of the portion of the porous metal base material that is embedded in the electrode mixture layer is determined from the maximum value of the width (in the thickness direction) of a portion in which the region where the porous metal base material can be identified overlaps with the region where the electrode mixture can be identified. The values in the following examples are obtained by this method.

The proportion (area ratio) of the electrode mixture exposed on the surface of the electrode is determined by the ratio (A/B) of the total area of the exposed electrode mixture (A) to the area of the entire electrode (B) in an SEM image of the electrode surface observed at a magnification of 50X to 200X. The values in the following examples are obtained by this method.

In the electrode stacked body, the isolation layer is interposed between the first electrode and the second electrode. The battery or capacitor that does not include an electrolyte containing a solvent, such as an all-solid-state battery, uses a solid electrolyte layer as the isolation layer.

Specific examples of the solid electrolyte constituting the solid electrolyte layer may be the same as those listed above for the positive electrode mixture. Among the solid electrolytes listed above, the sulfide-based solid electrolyte is preferred because it has a high lithium ion conductivity and also has the function of enhancing the moldability of the negative electrode mixture, the sulfide-based solid electrolyte having an argyrodite-type crystal structure is more preferred, and the sulfide-based solid electrolyte represented by the general composition formula (1) or (2) is further preferred.

The solid electrolyte layer may have a porous body such as a resin nonwoven fabric as a support.

The thickness of the solid electrolyte layer is preferably 10 to 200 µm.

In the electrode stacked body for the battery or capacitor that includes an electrolyte containing a solvent, a separator is used as the isolation layer interposed between the first electrode and the second electrode.

The separator should have sufficient strength and be able to retain a large amount of electrolyte. From this viewpoint, the separator is preferably a microporous film or a nonwoven fabric that contains polyethylene, polypropylene, or an ethylene-propylene copolymer and has a thickness of 10 to 50 µm and an aperture ratio of 30 to 70%.

The electrode stacked body can be produced by a production method including the following first to third steps.

In the first step, an electrode mixture is placed in a die, pressed, and preformed. The surface pressure of the preforming in the first step is preferably, e.g., 30 to 500 MPa.

In the second step, a porous metal base material is disposed on the electrode mixture preformed in the first step. In the third step, the porous metal base material is pressed against the electrode mixture and compressed. Due to the pressing in the third step, at least a part of the porous metal base material, including the end portion facing the electrode mixture, is embedded in the electrode mixture, so that the electrode mixture is integrated with the porous metal base material to form an electrode mixture layer.

As described above, in the third step, the porous metal base material is compressed in the thickness direction. Specifically, the degree of compression is such that the thickness of the porous metal base material after the compression is preferably 30% or less, more preferably 20% or less, and particularly preferably 10% or less of the thickness of the porous metal base material before the compression from the viewpoint of more reliably molding the porous metal base material and the electrode mixture. Furthermore, the thickness of the porous metal base material after the compression in the third step is preferably 1% or more, and more preferably 2% or more of the thickness of the porous metal base material before the compression from the viewpoint of retaining a certain amount or more of the electrode mixture in the pores of the porous metal base material and increasing the bonding strength between the porous metal base material and the electrode mixture layer.

The surface pressure during pressing in the third step is preferably 800 MPa or more, more preferably 1000 MPa or more, and particularly preferably 1200 MPa or more so that the electrode mixture is compression molded to sufficiently increase the density of the electrode mixture layer. The upper limit of the surface pressure during pressing in the third step is not particularly determined, and is usually about 2000 MPa in a general pressure device.

The electrode obtained after performing the first to third steps has a configuration in which at least a part of the porous metal base material, including the end portion facing the electrode mixture layer (i.e., a certain range extending in the thickness direction from the end portion of the porous metal base material), is embedded in the surface layer of the electrode mixture layer and integrated with the electrode mixture layer, and the other end portion of the porous metal base material is exposed on the surface of the electrode.

If the surface pressure during pressing in the third step is too high, the porous metal base material may cause cracks when it is compressed. Even though the porous metal base material is broken into a few pieces, the exposure of the end portion of the porous metal base material on the surface of the electrode can contribute to a reduction in contact resistance.

The electrode stacked body having a separator can be produced in the following manner. Two electrodes, each of which has been formed as described above, are prepared and arranged on both sides of a separator to form an electrode stacked body. The electrode located on one side of the separator may be an electrode other than the electrode with the above configuration (such as an electrode consisting of an electrode mixture molded body without a current collector, or an electrode having a current collector made of, e.g., metal foil).

The electrode stacked body having a solid electrolyte layer can be produced in the following manner. Two electrodes, each of which has been formed as described above, are prepared and arranged on both sides of a solid electrolyte layer, and optionally pressed, to form an electrode stacked body. The electrode located on one side of the solid electrolyte layer may be an electrode other than the electrode with the above configuration (such as an electrode consisting of an electrode mixture molded body without a current collector, or an electrode having a current collector made of, e.g., metal foil).

Moreover, the production of the electrode stacked body having a solid electrolyte layer may include a preliminary step before the first step. In the preliminary step, a solid electrolyte is placed in a die, pressed, and preformed. Then, an electrode mixture is placed on the solid electrolyte preformed in the preliminary step, followed by the first step.

The surface pressure of the preforming in the preliminary step is preferably, e.g., 30 to 120 MPa.

Further, the electrode stacked body in which two electrodes, each having the above configuration, are arranged on both sides of the solid electrolyte layer can also be produced in the following manner. One of the electrodes is formed on one side of the solid electrolyte layer by performing the preliminary step, the first step, the second step, and the third step. Then, the other of the electrodes is formed on the other side of the solid electrolyte layer by performing the first step, the second step, and the third step in sequence.

### <Electrochemical device>

The electrochemical device of the present invention includes an exterior body and the electrode stacked body of the present invention that is enclosed in the exterior body. The exterior body is configured to have a conductive path leading from the inside to the outside of the exterior body, to bring the conductive path into contact with the porous metal base material on the surface of at least one electrode of the electrode stacked body, and to provide electrical conduction between the electrode and the conductive path.

FIG. 2 is a cross-sectional view schematically illustrating an example of an electrochemical device of the present invention. In FIG. 2, an electrochemical device 100 includes an electrode stacked body 140 including a first electrode 110, a second electrode 120, and an isolation layer 130 interposed between the first electrode 110 and the second electrode 120. The electrode stacked body 140 is enclosed in an exterior body composed of a metal exterior can 150, a metal sealing can 160, and a resin gasket 170 interposed between the exterior can 150 and the sealing can 160. The sealing can 160 is fitted in the opening of the exterior can 150 via the gasket 170, and the edge around the opening of the exterior can 150 is crimped inward. Thus, the gasket 170 comes into contact with the sealing can 160, so that the opening of the exterior can 150 is sealed to create a closed structure inside the device.

When the electrode stacked body 140 includes a solid electrolyte layer as the isolation layer 130, e.g., only the electrode stacked body 140 is enclosed in the exterior body. On the other hand, when the electrode stacked body 140 includes a separator as the isolation layer 130, the electrode stacked body 140 and an electrolyte (not shown) are enclosed in the exterior body.

The first electrode 110 has an electrode mixture layer 111 and a porous metal base material 112. The entire porous metal base material 112, including the end portion facing the electrode mixture layer 111, is embedded in the surface layer of the electrode mixture layer 111. In other words, all the locations where the porous metal base material 112 is present correspond to the region where the electrode mixture layer and the porous metal base material coexist, i.e., correspond to the surface layer of the electrode mixture layer. In the first electrode 110, the end portion of the porous metal base material 112 facing away from the electrode mixture layer 111 (i.e., the lower end portion in FIG. 2) is exposed on the surface. The dotted line in the first electrode 110 indicates the boundary of the electrode mixture layer 111 between the region where the electrode mixture layer does not coexist with the porous metal base material and the region where the electrode mixture layer coexists with the porous metal base material. Thus, the dotted line corresponds to the end portion of the porous metal base material 112 facing the electrode mixture layer 111.

The second electrode 120 has an electrode mixture layer 121 and a porous metal base material 122. The entire porous metal base material 122, including the end portion facing the electrode mixture layer 121, is embedded in the surface layer of the electrode mixture layer 121. In other words, all the locations where the porous metal base material 122 is present correspond to the region where the electrode mixture layer and the porous metal base material coexist, i.e., corresponds to the surface layer of the electrode mixture layer. In the second electrode 120, the end portion of the porous metal base material 122 facing away from the electrode mixture layer 121 (i.e., the upper end portion in FIG. 2) is exposed on the surface. The dotted line in the second electrode 120 indicates the boundary of the electrode mixture layer 121 between the region where the electrode mixture layer does not coexist with the porous metal base material and the region where the electrode mixture layer coexists with the porous metal base material. Thus, the dotted line corresponds to the end portion of the porous metal base material 122 facing the electrode mixture layer 121.

In the electrochemical device 100 as illustrated in FIG. 2, the metal exterior can 150 forms a conductive path for the first electrode 110, and the end portion of the porous metal base material 112 that is exposed on the surface of the first electrode 110 is brought into contact with the inner surface of the exterior can 150, providing electrical conduction between the first electrode 110 and the exterior can 150 (i.e., the conductive path formed by the exterior can 150). The outer surface of the exterior can 150 serves as an external terminal for electrically connecting the electrochemical device to external equipment.

In the electrochemical device 100 as illustrated in FIG. 2, the metal sealing can 160 forms a conductive path for the second electrode 120, and the end portion of the porous metal base material 122 that is exposed on the surface of the second electrode 120 is brought into contact with the inner surface of the sealing can 160, providing electrical conduction between the second electrode 120 and the sealing can 160 (i.e., the conductive path formed by the sealing can 160). The outer surface of the sealing can 160 serves as an external terminal for electrically connecting the electrochemical device to external equipment.

The exterior body of the electrochemical device may be, e.g., a case composed of an exterior can and a sealing can, as illustrated in FIG. 2. The electrochemical device having such a case is in the form of a coin (button).

When the exterior body of the electrochemical device is the case composed of the exterior can and the sealing can, the exterior can and the sealing can may be sealed by caulking via a gasket, as illustrated in FIG. 2, or may be bonded together with a resin.

The exterior can and the sealing can may be made of, e.g., stainless steel. The gasket may be made of, e.g., polypropylene or nylon. When heat resistance is required in relation to the intended use of the electrochemical device, the gasket may also be made of heat-resistant resin with a melting point of more than 240°C. Examples of the heat-resistance resin include: fluororesins such as a tetrafluoroethylene-perfluoroalkoxyethylene copolymer (PFA); polyphenylene ether (PPE); polysulfone (PSF); polyarylate (PAR); polyether sulfone (PES); polyphenylene sulfide (PPS); and polyetheretherketone (PEEK). Moreover, when the electrochemical device is used for applications requiring heat resistance, the exterior body can be sealed by a glass hermetic seal.

The exterior body of the electrochemical device is not limited to the structure having the exterior can and the sealing can, and may be configured to have a conductive path leading from the inside to the outside of the exterior body, to bring the conductive path into contact with the porous metal base material on the surface of at least one electrode of the electrode stacked body, and to provide electrical conduction between the electrode and the conductive path. For example, the exterior body may be a ceramic case in which a conductive path made of metals such as gold, platinum, silver, palladium, copper, nickel, and cobalt or alloys thereof is provided so as to pass through the constituent materials.

The exterior body of the electrochemical device may be, e.g., circular or polygonal such as quadrilateral (square or rectangle) in a plan view.

The electrolyte is used in the electrochemical device including the electrode stacked body that includes a separator as the isolation layer, as described above. The electrolyte is usually a liquid electrolyte having a non-aqueous solvent or an aqueous solvent (i.e., a non-aqueous electrolyte solution or an aqueous electrolyte solution). The non-aqueous electrolyte solution is prepared by dissolving an electrolyte salt such as a lithium salt in an organic solvent. The organic solvent is not particularly limited, and examples of the organic solvent include: chain esters such as dimethyl carbonate, diethyl carbonate, ethyl methyl carbonate, and methyl propyl carbonate; cyclic esters with a high dielectric constant such as ethylene carbonate, propylene carbonate, butylene carbonate, and vinylene carbonate; and mixed solvents of chain esters and cyclic esters. In particular, a mixed solvent containing a chain ester as the main solvent and a cyclic ester is preferred.

When the electrochemical device is a battery or a lithium ion capacitor, examples of the electrolyte salt that is dissolved in the organic solvent to prepare the non-aqueous electrolyte solution include LiPF₆, LiBF₄, LiAsF₆, LiSbF₆, LiCF₃SO₃, LiC₄F₉SO₃, LiCF₃CO₂, Li₂C₂F₄(SO₃)₂, LiCₙF₂ₙ₊₁SO₃ (n ≥ 2), LiN(RfSO₂)(Rf'SO₂), LiC(RfSO₂)₃, and LiN(RfOSO₂)₂ (where Rf and Rf' each represents a fluoroalkyl group). These electrolyte salts may be used alone or in combination of two or more. When the electrochemical device is an electric double layer capacitor, the electrolyte salt in the non-aqueous electrolyte solution may be, e.g., (C₂H₅)₄NBF₄ or (C₂H₅)₄PBF₄.

The concentration of the electrolyte salt in the electrolyte solution is not particularly limited, and is preferably 0.3 mol/l or more, more preferably 0.4 mol/l or more and is also preferably 1.7 mol/l or less, and more preferably 1.5 mol/l or less.

The aqueous electrolyte solution may be, e.g., an alkaline aqueous solution (alkaline electrolyte solution) composed of an aqueous solution of alkali metal hydroxide such as potassium hydroxide, sodium hydroxide, or lithium hydroxide, or an aqueous solution with a pH of 3 or more and 12 or less.

The concentration of the alkali metal hydroxide in the alkaline electrolyte solution may be, e.g., 25 to 40% by mass.

The aqueous solution with a pH of 3 or more and 12 or less may be prepared by dissolving either one or two or more of the following electrolyte salts in water. For example, the electrolyte salts include: chlorides such as sodium chloride, potassium chloride, magnesium chloride, calcium chloride, ammonium chloride, and zinc chloride; hydroxides of alkali metals or alkaline-earth metals (e.g., sodium hydroxide, potassium hydroxide, and magnesium hydroxide), acetates (e.g., sodium acetate, potassium acetate, and magnesium acetate), nitrates (e.g., sodium nitrate, potassium nitrate, and magnesium nitrate), sulfates (e.g., sodium sulfate, potassium sulfate, and magnesium sulfate), phosphates (e.g., sodium phosphate, potassium phosphate, and magnesium phosphate), borates (e.g., sodium borate, potassium borate, and magnesium borate), citrates (e.g., sodium citrate, potassium citrate, and magnesium citrate), and glutamates (e.g., sodium glutamate, potassium glutamate, and magnesium glutamate); hydrogencarbonates of alkali metals (e.g., sodium hydrogencarbonate and potassium hydrogencarbonate); percarbonates of alkali metals (e.g., sodium percarbonate and potassium percarbonate); compounds containing halogens such as fluorides; and polycarboxylic acids.

The electrolyte of the electrochemical device may be a gel electrolyte obtained by gelation of the electrolyte solution with a gelling agent such as a polymer.

### Examples

Hereinafter, the present invention will be described in detail by way of examples. However, the present invention is not limited to the following examples.

### (Example 1)

A negative electrode mixture was prepared by mixing lithium titanate (Li₄Ti₅O₁₂: negative electrode active material) with an average particle size of 2 µm, a sulfide-based solid electrolyte (Li₆PS₅Cl) with an average particle size of 0.7 µm, and graphene (conductive assistant) at a mass ratio of 50:41:9.

A positive electrode mixture was prepared by mixing LiCoO₂ (positive electrode active material) with an average particle size of 5 µm, which had a LiNbO₃ coating layer on the surface, a sulfide-based solid electrolyte (Li₆PS₅Cl) with an average particle size of 0.7 µm, and graphene at a mass ratio of 65:30.7:4.3.

Next, a powder of a sulfide-based solid electrolyte (Li₆PS₅Cl) with an average particle size of 0.7 µm was placed in a powder molding die and preformed at a surface pressure of 70 MPa using a press to form a temporary molded layer of a solid electrolyte layer. Moreover, the negative electrode mixture was placed on the upper surface of the temporary molded layer of the solid electrolyte layer, and then preformed at a surface pressure of 50 MPa, so that a temporary molded layer of a negative electrode was further formed on the temporary molded layer of the solid electrolyte layer.

Next, a foamed metal porous body made of nickel ("Celmet (registered trademark)" manufactured by Sumitomo Electric Industries, Ltd.) was cut to a diameter of 7.25 mm (thickness: 1.2 mm, porosity: 98%) and placed on the temporary molded layer of the negative electrode that had been formed on the temporary molded layer of the solid electrolyte layer. The foamed metal porous body was then pressure molded at a surface pressure of 300 MPa into an integrated body of the solid electrolyte layer and the negative electrode.

Due to the pressure molding, the foamed metal porous body was compressed and embedded in the negative electrode mixture of the temporary molded layer of the negative electrode (negative electrode mixture), thus providing a negative electrode in which the porous metal base material was embedded in the surface layer of the negative electrode mixture layer.

After the die was turned upside down, the positive electrode mixture was placed on the upper surface of the solid electrolyte layer (i.e., the opposite side of the solid electrolyte layer to the negative electrode) in the die, and then preformed at a surface pressure of 50 MPa, so that a temporary molded layer of a positive electrode was formed on the solid electrolyte layer.

Next, a cut piece of the foamed metal porous body made of nickel, which was the same as that used for the negative electrode, was placed on the temporary molded layer of the positive electrode that had been formed on the solid electrolyte layer. The foamed metal porous body was then pressure molded at a surface pressure of 1400 MPa, resulting in an electrode stacked body.

Similarly to the negative electrode, the pressure molding provided a positive electrode in which the porous metal base material was embedded in the surface layer of the positive electrode mixture layer.

In the negative electrode of the electrode stacked body thus obtained, the negative electrode mixture layer had a thickness of 1400 µm, the porous metal base material had a thickness of 60 µm (which was 5% of the thickness of the porous metal base material before being used for the negative electrode), and the portion of the porous metal base material that had been embedded in the negative electrode mixture layer had a thickness of 60 µm (which was 100% of the overall thickness of the porous metal base material). The area ratio of the negative electrode mixture exposed on the surface of the negative electrode was 7%.

In the positive electrode of the electrode stacked body thus obtained, the positive electrode mixture layer had a thickness of 800 µm, the porous metal base material had a thickness of 60 µm (which was 5% of the thickness of the porous metal base material before being used for the positive electrode), and the portion of the porous metal base material that had been embedded in the positive electrode mixture layer had a thickness of 60 µm (which was 100% of the overall thickness of the porous metal base material). The area ratio of the positive electrode mixture exposed on the surface of the positive electrode was 7%.

### (Comparative Example 1)

An electrode stacked body was produced in the same manner as Example 1, except that neither the positive electrode nor the negative electrode had a porous metal base material.

The impedance of each of the electrode stacked bodies in Example 1 and Comparative Example 1 was measured in the following manner.

First, using the electrode stacked bodies in Example 1 and Comparative Example 1, coin-type all-solid-state batteries were produced by the following procedure.

Two flexible graphite sheets "PERMA-FOIL (product name)" (thickness: 0.1 mm, apparent density: 1.1 g/cm³) manufactured by TOYO TANSO CO., LTD. were prepared, and each of them was punched to the same size as the molded body. One of the graphite sheets was placed on the inner bottom surface of a stainless steel sealing can, into which a polyphenylene sulfide annular gasket had been fitted. Then, the electrode stacked body of Example 1 or Comparative Example 1 was placed on the graphite sheet with the negative electrode facing the graphite sheet. Further, the remaining graphite sheet was placed on the positive electrode of the electrode stacked body. This sealing can was covered with a stainless steel exterior can, and then the edge around the opening of the exterior can was crimped inward and sealed, resulting in a coin-type all-solid-state battery.

The coin-type all-solid-state batteries were charged with a constant current of 4 mA until the voltage reached 2.6 V, and subsequently were charged with a constant voltage of 2.6 V until the current reached 0.05 mA. The batteries were then discharged with a constant current of 0.01 mA until the voltage reached 1.0 V. Subsequently, the batteries were charged with a current of 1 mA, and adjusted so that the SOC was 10%. Thereafter, the electrode stacked bodes were taken out from the respective coin-type all-solid-state batteries, and the impedance of each of the electrode stacked bodies was measured as follows.

For the electrode stacked body in Example 1, both end portions of the electrode stacked body were sandwiched between two SUS plates (SUS304 plates), and a load of 0.02 N was applied in the thickness direction. In this state, the AC impedance was measured at 1 kHz with an applied voltage of 10 mV.

For the electrode stacked body in Comparative Example 1, the impedance was measured under the three conditions below.
(1) The impedance was measured under the same conditions as those for the electrode stacked body in Example 1, except that the load applied in the thickness direction was changed to 2 N. This is referred to as Comparative Example 1-1.
(2) The impedance was measured under the same conditions as those for the electrode stacked body in Comparative Example 1-1, except that a flexible graphite sheet "PERMA-FOIL (product name)" (thickness: 0.1 mm, apparent density: 1.1 g/cm³) manufactured by TOYO TANSO CO., LTD. was disposed between the positive electrode and the SUS plate and between the negative electrode and the SUS plate, respectively. This is referred to as Comparative Example 1-2.
(3) The impedance was measured under the same conditions as those for the electrode stacked body in Comparative Example 1-1, except that the foamed metal porous body, which was the same as that used in the preparation of the electrode stacked body in Example 1, was disposed between the positive electrode and the SUS plate and between the negative electrode and the SUS plate, respectively. This is referred to as Comparative Example 1-3.

Table 1 shows the measurement results.

**[TABLE 1]**

| | Load (N) | Current collector disposed between electrode stacked body and SUS plate | Impedance (Ω) |
|---|---|---|---|
| Example 1 | 0.02 | None | 11 |
| Comparative Example 1-1 | 2 | None | 50 |
| Comparative Example 1-2 | 2 | graphite sheet | 18 |
| Comparative Example 1-3 | 2 | foamed metal porous body | 30 |

As shown in Table 1, the electrode stacked body in Example 1, in which the porous metal base material was embedded in the surface layer of the electrode mixture layer and integrated with the electrode mixture layer, and the end portion of the porous metal base material was exposed on the surface of the electrode, had a low impedance even if the load applied in the thickness direction was reduced. In other words, the electrode stacked body in Example 1 was able to establish good conductive connections between the electrodes and their respective SUS plates without strongly pressing the SUS plates against the electrode stacked body. These results confirmed that the use of the electrode stacked body in Example 1 would provide an electrochemical device with a low internal resistance and excellent properties.

On the other hand, the electrode stacked body in Comparative Example 1, in which no porous metal base material was present in the electrodes, had a higher impedance than the electrode stacked body in Example 1 in spite of the fact that the load applied in the thickness direction was increased and the SUS plates were strongly pressed against the electrode stacked body, in all of Comparative Example 1-1, in which the electrode stacked body did not include a current collector, and Comparative Examples 1-2 and 1-3, in which the electrode stacked bodies respectively included the graphite sheet and the foamed metal porous body as current collectors on the electrode surfaces, but they were not integrated with the electrodes.

The invention may be embodied in other forms without departing from the essential characteristics thereof. The embodiments disclosed in this application are to be considered in all respects as illustrative and not limiting. The scope of the invention is indicated by the appended claims rather than by the foregoing description, and all changes that come within the meaning and range of equivalency of the claims are intended to be embraced therein.

### Industrial Applicability

The electrochemical device of the present invention can be used in the same applications as those of conventionally known electrochemical devices. The electrode stacked body of the present invention can constitute the electrochemical device of the present invention.

### Description of Reference Numerals

- 10: Porous metal base material
- 11: Electrode mixture
- 100: Electrochemical device
- 110: First electrode
- 111: Electrode mixture layer
- 112: Porous metal base material
- 120: Second electrode
- 121: Electrode mixture layer
- 122: Porous metal base material
- 130: Isolation layer
- 140: Electrode stacked body
- 150: Exterior can
- 160: Sealing can
- 170: Gasket

## Claims

1. An electrode stacked body comprising:
a first electrode, a second electrode, and an isolation layer interposed between the first electrode and the second electrode,
wherein at least one of the first electrode and the second electrode has an electrode mixture layer and a sheet-type porous metal base material,
at least a part of the porous metal base material, including one end portion facing the electrode mixture layer, is embedded in a surface layer of the electrode mixture layer and integrated with the electrode mixture layer, and
the other end portion of the porous metal base material is exposed on a surface of the electrode.

2. The electrode stacked body according to claim 1, wherein the porous metal base material is a foamed metal porous body that has been compressed.

3. The electrode stacked body according to claim 1, wherein the isolation layer is a solid electrolyte layer.

4. The electrode stacked body according to any one of claims 1 to 3,
wherein a thickness of the porous metal base material is 30% or less of a thickness of the electrode mixture layer.

5. A method for producing the electrode stacked body according to claim 1,
the method comprising:
a first step of placing an electrode mixture in a die and pressing and preforming the electrode mixture;
a second step of disposing a sheet-type porous metal base material on the electrode mixture preformed in the first step; and
a third step of pressing the porous metal base material against the electrode mixture, compressing the porous metal base material, and thereby embedding at least a part of the porous metal base material, including an end portion facing the electrode mixture, in the electrode mixture, so that the electrode mixture is integrated with the porous metal base material to form an electrode mixture layer.

6. The method according to claim 5, wherein the porous metal base material is a foamed metal porous body.

7. The method according to claim 5, wherein the isolation layer of the electrode stacked body is a solid electrolyte layer,
the method comprises a preliminary step before the first step, the preliminary step including placing a solid electrolyte in a die and pressing and preforming the solid electrolyte, and
the electrode mixture is placed on the preformed solid electrolyte, followed by the first step.

8. The method according to any one of claims 5 to 7, wherein a thickness of the porous metal base material is 30% or less of a thickness before compression in the third step.

9. An electrochemical device comprising:
an exterior body; and
the electrode stacked body according to claim 1, which is enclosed in the exterior body,
wherein the exterior body is configured to have a conductive path leading from an inside to an outside, to bring the conductive path into contact with the porous metal base material on the surface of at least one electrode of the electrode stacked body, and to provide electrical conduction between the electrode and the conductive path.

10. The electrochemical device according to claim 9, wherein the porous metal base material is a foamed metal porous body that has been compressed.

11. The electrochemical device according to claim 9, wherein the isolation layer is a solid electrolyte layer.

12. The electrochemical device according to any one of claims 9 to 11, wherein a thickness of the porous metal base material is 30% or less of a thickness of the electrode mixture layer.
